# EUROPÄISCHE PATENTANMELDUNG

(11) **EP 2 063 332 A1**
(43) Veröffentlichungstag der Anmeldung: **27.05.2009**
(21) Anmeldenummer: 07022631.1
(22) Anmeldetag: 21.11.2007
(51) Int. Cl.: G05B 19/042

(54) **Sensor für die Automatisierungstechnik und Verfahren zum Übermitteln von Konfigurationsdaten von einem externen Rechner an einen Sensor**

(71) Anmelder: Pepperl + Fuchs GmbH, 68307 Mannheim (DE)
(72) Erfinder: Trebbels, Dennis, 67434 Neustadt a.d. Weinstrasse (DE); Höbel, Heiko, 67549 Worms (DE)
(74) Vertreter: Schiffer, Axel Martin

(57) **Zusammenfassung**

Die Erfindung betrifft einen Sensor für die Automatisierungstechnik zum Nachweis einer Messgröße, insbesondere zum Nachweis von Objekten oder Gegenständen, mit einem Sensorelement zum Messen einer physikalischen Größe, mit einer Steuer- und Auswerteeinheit zum Ansteuern des Sensorelements, zum Verarbeiten eines Messsignals des Sensorelements und zum Ausgeben eines Ausgangssignals an eine Schnittstelle, wobei die Steuer- und Auswerteeinheit einen Speicher aufweist zum Abspeichern mindestens von Konfigurations- und Programmdaten, und mit der Schnittstelle, die mit der Steuer- und Auswerteeinheit zusammenwirkt, zum Verbinden des Sensors mit einem Anschlussgerät in einem Betriebsmodus, wobei der Sensor im Betriebsmodus von dem Anschlussgerät aus mit elektrischer Energie versorgt wird. Der Sensor ist dadurch gekennzeichnet, dass die Schnittstelle für einen Konfigurationsmodus zum direkten Verbinden des Sensors mit einem externen Rechner eingerichtet ist, dass der Sensor im Konfigurationsmodus von dem externen Rechner aus über die Schnittstelle mit elektrischer Energie versorgt wird, und dass die Schnittstelle eingerichtet ist, um in dem Konfigurationsmodus über zwei Adern einer Datenleitung Konfigurationsdaten mit einer Bandbreite größer als 1 MBit/s differenziell zwischen dem Sensor und dem externen Rechner zu übertragen. Die Erfindung betrifft außerdem ein Verfahren zum Übermitteln von Konfigurationsdaten von einem externen Rechner an einen Sensor.

## Beschreibung

Die vorliegende Erfindung betrifft in einem ersten Aspekt einen Sensor für die Automatisierungstechnik zum Nachweis einer Messgröße, insbesondere zum Nachweis von Objekten oder Gegenständen, nach dem Oberbegriff des Anspruchs 1.

In einem zweiten Gesichtspunkt bezieht sich die Erfindung auf ein Verfahren zum Übermitteln von Konfigurationsdaten von einem externen Rechner an einen Sensor für die Automatisierungstechnik.

Ein gattungsgemäßer Sensor weist ein Sensorelement zum Messen einer physikalischen Größe und eine Steuer- und Auswerteeinheit zum Ansteuern des Sensorelements, zum Verarbeiten eines Messsignals des Sensorelements und zum Ausgeben eines Ausgangssignals an eine Schnittstelle auf, wobei die Steuer- und Auswerteeinheit einen Speicher aufweist zum Abspeichern mindestens von Konfigurations- und Programmdaten. Die Schnittstelle wirkt mit der Steuer- und Auswerteeinheit zusammen und ist zum Verbinden des Sensors mit einem Anschlussgerät in einem Betriebsmodus eingerichtet, wobei der Sensor im Betriebsmodus von dem Anschlussgerät aus mit elektrischer Energie versorgt wird.

Solche Sensoren sind in zahlreichen Varianten, beispielsweise als induktive, kapazitive oder optische, sowie als Temperatur-, Druck-, Füllstandssensoren und Weg- oder Drehgeber bekannt.

Zum Programmieren und/oder Konfigurieren der Sensoren werden bisher spezielle Programmiergeräte eingesetzt. Dabei werden üblicherweise RS232- oder RS485-Schnittstellen verwendet. Der Datentransfer ist hier jedoch vergleichsweise langsam, so dass ein Update von größeren Software-Teilen umständlich ist. Bei einem alternativen Verfahren werden dem Sensor die nötigen Daten mit Hilfe von Kurzschlusstaktungen übermittelt. Dazu wird der Sensor üblicherweise von dem Anschlussgerät getrennt, an welches er im normalen Messbetrieb angeschlossen ist und das Programmiergerät wird an den nun freien Steckverbinder angeschlossen. Über definierte Kurzschlüsse zwischen den einzelnen Kontakten des Steckverbinders werden sodann die nötigen Konfigurationsdaten, insbesondere eine aktuelle Firmware-Version, auf den Sensor übertragen. Hierfür wird ebenfalls ein separates Programmiergerät benötigt und zum auch dieses Verfahren ist relativ langsam.

Ein Näherungsschalter, bei welchem über einen elektrischen Anschluss sowohl Daten als auch elektrische Energie übertragen werden, ist in DE 41 23 828 C2 beschrieben.

Die US-2005/0083741 A1 und US-7,165,109 B2 betreffen die Funktionalität von USB-Komponenten. In US-7,165,109 B2 ist ein Ablauf beschrieben, wo eine an eine USB-Schnittstelle eines Rechners angeschlossene Komponente diesen Rechner veranlasst, sich über das Internet eine geeignete Treiber-Software für die Komponente herunterzuladen.

Eine **Aufgabe** der Erfindung ist es, einen Sensor zu schaffen, an welchen im Vergleich zum Stand der Technik Konfigurationsdaten einfacher übermittelt werden können. Außerdem soll ein Verfahren zum einfachen Übermitteln von Konfigurationsdaten an Sensoren von einem externen Rechner aus angegeben werden.

Diese Aufgabe wird in einem ersten Gesichtspunkt der Erfindung durch den Sensor mit den Merkmalen des Anspruchs 1 gelöst.

In einem zweiten Aspekt der Erfindung wird die Aufgabe durch das Verfahren mit den Merkmalen des Anspruchs 11 gelöst.

Bevorzugte Ausgestaltungen des erfindungsgemäßen Sensors und vorteilhafte Varianten des erfindungsgemäßen Verfahrens sind Gegenstand der abhängigen Ansprüche und werden außerdem in der folgenden Beschreibung, insbesondere im Zusammenhang mit der Figur, erläutert.

Der Sensor der oben genannten Art ist erfindungsgemäß dadurch weitergebildet, dass die Schnittstelle für einen Konfigurationsmodus zum direkten Verbinden des Sensors mit einem externen Rechner eingerichtet ist, dass der Sensor im Konfigurationsmodus von dem externen Rechner aus über die Schnittstelle mit elektrischer Energie versorgt wird, und dass die Schnittstelle eingerichtet ist, um in dem Konfigurationsmodus über zwei Adern einer Datenleitung Konfigurationsdaten mit einer Bandbreite größer als 1 MBit/s differenziell zwischen dem Sensor und dem externen Rechner zu übertragen.

Bei dem erfindungsgemäßen Verfahren zum Übermitteln von Konfigurationsdaten von einem externen Rechner an einen Sensor wird der Sensor über eine Schnittstelle in einem Konfigurationsmodus direkt mit einem externen Rechner verbunden und von dem externen Rechner aus mit elektrischer Energie versorgt. Weiterhin werden im Konfigurationsmodus über zwei Adern einer Datenleitung Konfigurationsdaten mit einer Bandbreite größer als 1 MBit/s differenziell zwischen dem Sensor und dem externen Rechner übertragen. Dabei ist dieselbe Schnittstelle für einen Betriebsmodus eingerichtet zum Verbinden des Sensors mit einer speicherprogrammierbaren Steuerung oder einem Bussystem und der Sensor wird im Betriebsmodus von dem Anschlussgerät aus über die Schnittstelle mit elektrischer Energie versorgt.

Als ein Kerngedanke der Erfindung kann zunächst die Erkenntnis angesehen werden, dass heute verfügbare Mikrocontroller sowie Speicherbausteine hinreichend große Speicherbereiche aufweisen, dass dort Software für unterschiedliche Funktionalitäten der Schnittstelle abgelegt werden kann.

Als weiterer Grundgedanke der Erfindung kann erachtet werden, die Schnittstelle des Sensors multifunktional einzurichten, so dass der Sensor über ein und dieselbe Schnittstelle sowohl mit einem Anschlussgerät als auch mit dem externen Rechner, über welchen die Konfigurierung erfolgt, verbunden werden kann.

Ein wesentlicher Vorteil der Erfindung kann darin gesehen werden, dass nunmehr zwischen dem Sensor und dem externen Rechner keine zusätzlichen Programmiergeräte, wie beispielsweise Protokollwandler, Schnittstellenwandler oder Programmiergeräte für Kurzschlusstaktung und damit zusammenhängende Komponenten, etwa Netzgeräte, mehr notwendig ist.

Ein weiterer Vorteil ist, dass eine größere Störsicherheit erreicht und damit die notwendigen Konfigurierungsdaten mit höherer Geschwindigkeit an die jeweiligen Sensoren übermittelt werden können.

Besonders bevorzugt wird für den Konfigurationsmodus auf Standardprotokolle zurückgegriffen, so dass hierfür kein weiterer Entwicklungsaufwand nötig ist.

Bei dem Sensorelement kann es sich grundsätzlich um jedes Element handeln, welches zum Nachweis einer physikalischen Größe geeignet ist. Beispielsweise kann das Sensorelement eine Spule oder ein Schwingkreis eines induktiven Näherungsschalters, ein Fotodetektor eines optischen Sensors, eine kapazitive Sonde oder ein Thermoelement sein.

Dementsprechend kann es sich bei den Sensoren grundsätzlich um jede Art von Sensoren zum Nachweis einer Messgröße oder zum Nachweis von Gegenständen oder Objekten handeln. Besonders vorteilhaft kann die vorliegende Erfindung für Sensoren im industriellen Bereich, beispielsweise induktive, kapazitive oder optische Sensoren, Temperatur- oder Drucksensoren, eingesetzt werden. Beispielsweise kann es sich auch um Identifizierungssensoren, etwa RFID-Leseköpfe, handeln.

Unter dem Begriff des Konfigurierens soll für die vorliegende Beschreibung jede softwaremäßige Veränderung oder Einstellung des Sensors verstanden werden. Dies umfasst insbesondere jegliche Übertragung von Programm- oder Binärcode an den Sensor sowie das Aufspielen einer Firmware und das Ändern und/oder Hinzufügen von Parametern.

Der Konfigurationsmodus beinhaltet jedenfalls einen Konfigurationsvorgang, der grundsätzlich auch während des Messbetriebs erfolgen kann. Konfigurationsmodus und Betriebsmodus können sich demgemäß zeitlich überlappen, also gleichzeitig eingenommen werden.

Grundsätzlich kann es sich bei dem Anschlussgerät um ein Relais, eine sonstige Schalt- oder Steuereinrichtung, ein Speise- oder Auswertegerät oder auch um ein Bussystem handeln. In den häufigsten Fällen wird der Sensor im Betriebsmodus mit einer speicherprogrammierbaren Steuerung als Anschlussgerät verbunden.

Unter einer Schnittstelle sollen für die vorliegende Beschreibung diejenigen Komponenten verstanden werden, welche notwendig sind, um zwischen dem Sensor und dem externen Rechner bzw. zwischen dem Sensor und einem Anschlussgerät eine Datenverbindung zu etablieren. Erfindungsgemäß ist diese schnittstellenmäßige Verbindung auch in der Lage, elektrische Energie zum Versorgen des Sensors zu übertragen.

Die Schnittstelle weist deshalb zweckmäßig Hardwaremittel, insbesondere einen Steckverbinder, sowie eine Software auf, die in der Steuer- und Auswerteeinheit gespeichert ist.

Unter dem Begriff Steuer- und Auswerteeinheit sollen im Wesentlichen alle intelligenten elektronischen Komponenten des Sensors verstanden werden. Grundsätzlich kann die Steuer- und Auswerteeinheit auch aus einer Mehrzahl von Mikrocontrollern, FPGAs, CPLDs, GALs oder anderen programmierbaren Logik-Komponenten und gegebenenfalls zugeordneten Speicherbausteinen, durch welche beispielsweise unterschiedliche Funktionalitäten realisiert werden, aufgebaut sein.

Die Übertragung von Daten und Energie kann grundsätzlich auch drahtlos, beispielsweise über Funk, erfolgen. Prinzipiell sind auch Kombinationen möglich, so dass beispielsweise die Energie drahtgebunden und die Daten per Funk übertragen werden.

Bei zweckmäßigen Ausgestaltungen des erfindungsgemäßen Sensors sind jedoch Steckverbindungen als Anschlussmittel vorgesehen, über welche sowohl Daten als auch elektrische Energie geleitet werden kann. Ein besonderer Vorteil der Erfindung ist, dass als externer Rechner praktisch jede Art von Rechner eingesetzt werden kann. Beispielsweise können im Fertigungsprozess PCs verwendet und es können hierbei insbesondere kundenspezifische Parametrierungen sowie Funktionstests durchgeführt werden. Wenn eine Neukonfigurierung oder eine Eichung am Einsatzort notwendig sein sollte, werden bevorzugt Laptops, Handhelds oder Palmtops eingesetzt. Grundsätzlich kann auch ein Mobiltelefon hierfür verwendet werden.

An dem Gehäuse und den Peripherieverbindungen des Sensors müssen dann vorteilhafterweise keine Änderungen vorgenommen werden.

Besonders bevorzugt werden als Steckverbinder für Sensoren in der Automatisierungstechnik dichtende Rundsteckverbinder eingesetzt. Hierbei kann es sich beispielsweise um 4- oder 5-polige Steckverbinder, insbesondere V1- oder V3-Steckverbinder, handeln.

Besonders bevorzugt wird der Sensor für den Konfigurationsmodus an eine USB-Schnittstelle des externen Rechners angeschlossen. Der Sensor wird von dem externen Rechner dann beispielsweise als Massenspeicher erkannt und behandelt. Auch eine Versorgung mit elektrischer Energie ist über die USB-Schnittstelle möglich. Die Steuer- und Auswerteeinheit weist dann eine entsprechende USB-Funktionalität auf, wobei der externe Rechner als USB-Host und der Sensor als USB-Slave wirkt. Die beispielsweise im Speicher der Steuer- und Auswerteeinheit abgelegte Software ist demgemäß zum Bereitstellen einer USB-Slave-Funktionalität der Schnittstelle eingerichtet. Diese Software kann insbesondere automatisch gestartet werden, wenn der Sensor an den externen Rechner angeschlossen wird.

Bei einer weiteren besonders bevorzugten Variante ist in dem Speicher der Steuer- und Auswerteeinheit eine Konfigurationssoftware gespeichert, welche in einen Arbeitsspeicher eines externen Rechners geladen werden kann, wenn der Sensor an den externen Rechner angeschlossen ist, und die Konfigurationssoftware ist zum automatischen oder interaktiven Konfigurieren des Sensors durch einen Benutzer eingerichtet.

Zweckmäßig wird dabei der Sensor zeitweilig mit dem externen Rechner verbunden, anschließend wird die in dem Speicher des Sensors gespeicherte Konfigurationssoftware in den Arbeitsspeicher des Rechners geladen und anschließend wird der Sensor mit Hilfe der Konfigurationssoftware automatisch oder von einem Benutzer konfiguriert.

Als Grundgedanke dieser Weiterbildung kann erachtet werden, den Sensor autark zu gestalten, so dass die notwendige Software zum Konfigurieren des Sensors in dem Sensor selbst enthalten ist.

Ein wesentlicher Vorteil ist dabei nicht nur, dass keine zusätzlichen Programmiergeräte mehr notwendig sind. Es müssen außerdem keine CDs, DVDs oder ähnliche Datenträger, auf welchen die nötige Parametrier- oder Konfigurierungssoftware abgelegt ist, mitgeliefert werden. Schließlich kann bei der Erfindung die Notwendigkeit für den Anwender, entfallen, auf dem externen Rechner Software zu installieren. Vorteilhaft ist außerdem, dass bei der Erfindung auf vorhandene Hardware und betriebssystemunabhängige Software zurückgegriffen werden kann.

Die Konfiguration des Sensors oder ein Neuaufspielen oder Ergänzen einer Firmware auf den Sensor ist besonders komfortabel und einfach möglich, wenn die Konfigurationssoftware nach Verbindung des Sensors mit dem externen Rechner automatisch auf dem externen Rechner gestartet wird.

Sofern Einstellungen des externen Rechners ein völlig automatisches Starten der Konfigurationssoftware nicht zulassen, kann bevorzugt vorgesehen sein, dass zum Start der Konfigurationssoftware jedenfalls nur eine minimale Benutzerinteraktion, beispielsweise also ein einmaliges Bestätigen durch Drücken der ENTER-Taste, erforderlich ist.

Jeweils aktuelle Versionen der Firmware oder der Konfigurationssoftware für die Sensoren können auf einem Server, auf welchen über das Internet zugegriffen werden kann, abgelegt werden. Besonders vorteilhaft ist deshalb, wenn die auf dem Sensor abgelegte Konfigurationssoftware den externen Rechner veranlasst, eine Netzwerkverbindung zu einem Remote-Host aufzubauen und zu prüfen, ob aktuelle Programmversionen für die Konfigurationssoftware und/oder eine Sensor-Firmware vorliegen und gegebenenfalls aktuelle Programmversionen vom Remote-Host herunterzuladen und in den Speicher des Sensors zu übertragen.

Die Konfigurationssoftware kann auf dem Sensor grundsätzlich als ausführbarer Code gespeichert sein. Um eine größere Unabhängigkeit von dem konkret angesetzten externen Rechner zu erzielen, ist die Konfigurationssoftware besonders bevorzugt plattformunabhängig ausführbar. Beispielsweise kann die Konfigurationssoftware auch als interpretierbarer Code abgespeichert sein.

Damit sensorintern die richtigen Einstellungen vorgenommen werden können und der Sensor auf einen Konfigurations- oder einen Messbetrieb eingestellt werden kann, ist es zweckmäßig, wenn eine elektronische Einrichtung vorhanden ist, die erkennt, ob sich der Sensor in einer Betriebsverbindung mit einem Ausschlussgerät befindet und/oder ob der Sensor mit einem externen Rechner verbunden ist. Durch eine solche elektronische Einrichtung kann auch die Gefahr einer Beschädigung wegen zu hoher Spannungspegel an den Kontakten der Steckverbinder, welche die Anschlussmittel bilden, reduziert werden. Außerdem können in Sondersituationen, wo der Sensor sowohl an einem Anschlussgerät als auch an einen externen Rechner angeschlossen ist, Konflikte etwa zwischen dem Anschlussgerät und dem externen Rechner vermieden werden.

Bei einer einfachen Variante kann hierzu die elektronische Einrichtung eine an mindestens einem Kontakt des ersten oder des zweiten Anschlussmittels anliegende Versorgungsspannung auswerten. Ergänzend oder alternativ kann die elektronische Einrichtung auch ein an einem Kontakt des ersten oder des zweiten Anschlussmittels anliegendes Datensignal auswerten. Grundsätzlich können auch an mehreren Kontakten der Schnittstelle anliegende Datensignale ausgewertet werden. So kann insgesamt zuverlässig festgestellt werden, ob sich der Sensor in einer Betriebsverbindung befindet oder mit einem externen Rechner verbunden ist.

Weiterhin ist bevorzugt, wenn der Speicher der Steuer- und Auswerteinheit einen schreibgeschützten Bereich aufweist. Beispielsweise kann hierin ein Benutzerhandbuch abgespeichert sein, welches bei Verbindung mit dem externen Rechner auf diesem gestartet und angesehen werden kann. Ein solches Benutzerhandbuch kann aktualisiert oder ergänzt werden, wobei aktuelle Versionen von dem externen Rechner über das Internet heruntergeladen und anschließend auf den Sensor übertragen werden können.

Wenn das Speichervolumen der Steuer- und Auswerteeinheit nicht ausreicht, können gegebenenfalls zusätzliche Speicherbausteine eingesetzt werden.

Zweckmäßig kann in einem Speicher der Steuer- und Auswerteeinheit ein Bootloader vorhanden oder gespeichert sein, welcher eine nachträgliche Programmierung des Mikrocontrollers ermöglicht.

Weitere Merkmale und Vorteile der Erfindung werden nachstehend mit Bezug auf die beigefügte schematische Zeichnung beschrieben. Hierin zeigt:

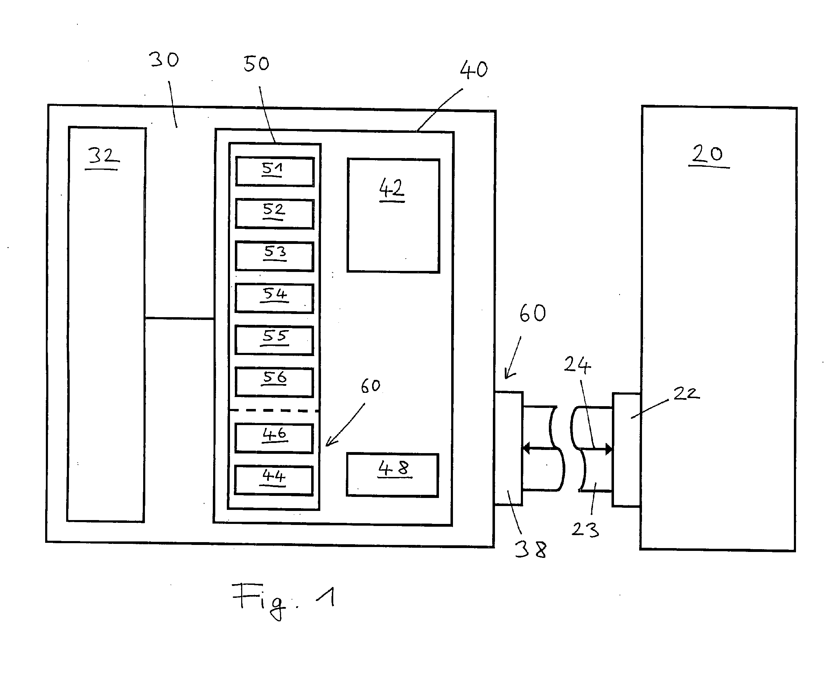

- Figur 1:: in schematischer Ansicht ein Ausführungsbeispiel eines erfindungsgemäßen Sensors

Der in Figur 1 schematisch dargestellte Sensor 30 weist als wesentliche Komponenten ein Sensorelement 32, beispielsweise eine Spule, eine Steuer- und Auswerteeinheit 40 mit Speicher 50 und einen Steckverbinder 38 als Teil einer Schnittstelle 60.

Im Betriebsmodus wird der Sensor 30 über den Steckverbinder 38 an ein hier nicht dargestelltes Anschlussgerät, beispielsweise eine speicherprogrammierbare Steuerung, angeschlossen.

In der in Figur 1 gezeigten Situation befindet sich der Sensor 30 in einem Konfigurationsmodus und ist über ein USB-Kabel 23 an eine USB-Schnittstelle 22 eines Rechners 20, insbesondere eines PCs, angeschlossen. Ein in beiden Richtungen stattfindender Daten- und Energieaustausch ist durch einen Doppelpfeil 24 veranschaulicht.

Die Steuer- und Auswerteeinheit 40 ist ein Mikrocontroller mit einem Flash-Memory als Speicher 50. Derzeit sind solche Mikrocontroller mit Flash-Memory in der Größe von 512 kB bis zu 1 MB erhältlich. Dieser große Speicher 50 bietet ausreichend Platz, um neben einer Sensor-Firmware 52 und dauerhaft gespeicherten Daten, beispielsweise Kalibrierdaten 54 und einer Parameterdatei 55 außerdem eine eigenständige Konfigurationssoftware 56 zu speichern, welche zum komfortablen Konfigurieren und Parametrieren des Sensors 30 vorgesehen ist.

Außerdem sind im Speicher 50 als weiterer Bestandteil der Schnittstelle 60 Software-Module 44, 46 gespeichert, durch welche die notwendigen Schnittstellenfunktionalitäten bereitgestellt werden, wenn der Sensor 30 an eine speicherprogrammierbare Steuerung oder ein Bussystem bzw. an den Rechner 20 angeschlossen ist.

Außerdem weist der Speicher 50 einen schreibgeschützten Bereich 51 auf, in welchem beispielsweise ein Benutzerhandbuch des Sensors gespeichert sein kann, welches bei Anschluss des Sensors 30 an den Rechner 20 mit Hilfe eines Monitors dieses Rechners von einem Benutzer angesehen werden kann. Weiterhin ist in dem Speicher 50 eine Software 53, ein sogenannter Bootloader, vorgesehen, der ein nachträgliches Programmieren des Mikrocontrollers ermöglicht.

Als weitere Bestandteile weist die Steuer- und Auswerteeinheit 40 eine CPU 42 sowie eine elektronische Einrichtung 48 auf, welche feststellt, ob sich der Sensor 30 in einer Betriebsverbindung mit einem Anschlussgerät befindet oder ob der Sensor 30, wie in der dargestellten Situation, mit einem externen Rechner 20 verbunden ist. Bei dieser elektronischen Einrichtung 48 handelt es sich nicht um eine Demodulationsschaltung, da bei der vorliegenden Erfindung die Versorgungsspannung und die Daten über separate Kontakte des Steckverbinders 38 geführt werden. Ein USB-Betrieb kann beispielsweise dadurch festgestellt werden, dass eine Sensorbetriebsspannung 5 Volt beträgt und somit weit entfernt ist von dem für Sensoren üblichen Spannungsbereich zwischen 10 und 30 Volt DC. Entsprechend kann die elektronische Einrichtung 48 veranlassen, dass der Sensor wieder in Normalbetrieb arbeitet, wenn die Betriebsspannung im genannten Bereich zwischen 10 und 30 Volt liegt und der Sensor entsprechend an ein Anschlussgerät angeschlossen ist. Die Versorgungsspannungen müssen hier nicht notwendigerweise auf denselben Kontakten des Steckverbinders 38 liegen sondern es ist grundsätzlich auch möglich, dass die Versorgungsspannung auf jeweils verschiedenen Pins zugeführt wird.

Wenn der Sensor 30 an eine speicherprogrammierbare Steuerung oder ein Bussystem angeschlossen wird, wird die Kommunikation über die Schnittstelle 60 durch die Software 46 definiert. Entsprechend kommt, wenn der Sensor 30 mit der USB-Schnittstelle 22 des Rechners 20 verbunden ist, innerhalb des Sensors 30 die Software 44 zum Einsatz, durch welche eine USB-Slave-Funktionalität realisiert wird.

Erfindungsgemäß erfolgt dann ein Datenaustausch mit dem Rechner 20 über ein USB-Protokoll, wobei in diesem Konfigurationsmodus über zwei Adern der USB-Leitung 23 als Datenleitung Konfigurationsdaten mit einer Bandbreite größer als 1 MBit/s differenziell zwischen dem Sensor und dem externen Rechner übertragen werden. Zudem wird der Sensor 30 in diesem Konfigurationsmodus über den Rechner 20 mit elektrischer Energie versorgt.

Der Sensor 30 kann sich dann wie ein Massenspeicher verhalten und wird von dem PC demgemäß behandelt werden. Beispielsweise können in dem Speicher 50 die Daten in einem Dateisystem abgelegt sein. Solch ein Dateisystem kann von einem Betriebssystem nach Anstecken des Sensors 30 an die Schnittstelle 22 des Rechners 20 automatisch erkannt werden. Nach dem Anstecken kann sodann vom Rechner 20 in gewohnter Weise auf die Dateien im Massenspeicher zugegriffen werden. Eine dieser Dateien beinhaltet die Konfigurationssoftware 56, welche eine leicht zu bedienende graphische Benutzeroberfläche zur Verfügung stellt und welche nach Anstecken des Sensors 30 an den Rechner 20 entweder automatisch oder gegebenenfalls nach Bestätigung durch einen Benutzer, also mit minimaler Benutzerinteraktion, auf dem Rechner 20 gestartet wird. Mit Hilfe dieser Konfigurationssoftware 56 kann der Sensor 30 von einem Benutzer interaktiv konfiguriert werden und es können beispielsweise Änderungen in der Parameterdatei 55 und/oder bei den Kalibrierdaten 54 vorgenommen werden. Die Konfigurierungssoftware 56 kann beispielsweise in Java implementiert sein. Der Rechner 20 ist dann ohne Weiteres in der Lage, dieses Programm auszuführen. Vom Benutzer während der Konfigurierungsphase mit Hilfe der Konfigurierungssoftware 56 vorgenommene Änderungen und Einstellungen können beispielsweise in einer weiteren Datei im Speicher 50 des Sensors 30 dauerhaft gespeichert werden. Ein Zugriff auf diese Datei kann dann im Normalbetrieb des Sensors, also wenn der Sensor mit dem Anschlussgerät verbunden ist, mit Hilfe der Sensor-Firmware 52 durch eine geeignete Schnittstelle erfolgen.

Durch die vorliegende Erfindung werden ein neuartiger Sensor und ein Verfahren zum Konfigurieren eines Sensors bereitgestellt, wobei insbesondere ein bereits vorhandener dichtender Rundsteckverbinder für eine alternative Kommunikation über ein USB-Protokoll mit einem externen Rechner genutzt werden. Bei einer besonders bevorzugten Variante enthält der Sensor ein, insbesondere graphisches, Parametriertool oder eine Konfigurationssoftware, welche bei der Produktion des Sensors aber auch vom Endanwender zur Konfigurationszwecken genutzt werden kann. Mit Hilfe der Erfindung sind Firmware-Updates und Updates der Konfigurierungssoftware simultan möglich und können sehr bequem, beispielsweise auch vom Endanwender, durchgeführt werden.

Grundsätzlich ist auch möglich, am Sensorgehäuse einen zusätzlichen Steckverbinder für die USB-Verbindung mit dem externen Rechner vorzusehen. Ebenso können auch andere Schnittstellen oder Protokolle, beispielsweise Firewire, verwendet werden. Besonders bevorzugt werden USB-Protokolle beziehungsweise Fortentwicklungen oder Varianten hiervon, eingesetzt. Schließlich ist auch eine Funkschnittstelle zum externen Rechner grundsätzlich möglich.

## Patentansprüche

1. Sensor für die Automatisierungstechnik zum Nachweis einer Messgröße, insbesondere zum Nachweis von Objekten oder Gegenständen, insbesondere zur Durchführung des Verfahrens nach einem der Ansprüche 10 bis 18,
mit einem Sensorelement (32) zum Messen einer physikalischen Größe,
mit einer Steuer- und Auswerteeinheit (40) zum Ansteuern des Sensorelements (32), zum Verarbeiten eines Messsignals des Sensorelements (32) und zum Ausgeben eines Ausgangssignals an eine Schnittstelle (60),
wobei die Steuer- und Auswerteeinheit (40) einen Speicher (50) aufweist zum Abspeichern mindestens von Konfigurations- und Programmdaten (51-55), und mit der Schnittstelle (60), die mit der Steuer- und Auswerteeinheit (40) zusammenwirkt, zum Verbinden des Sensors (30) mit einem Anschlussgerät in einem Betriebsmodus, wobei der Sensor (30) im Betriebsmodus von dem Anschlussgerät aus mit elektrischer Energie versorgt wird,
**dadurch gekennzeichnet,**
**dass** die Schnittstelle (60) für einen Konfigurationsmodus zum direkten Verbinden des Sensors (30) mit einem externen Rechner (20) eingerichtet ist,
**dass** der Sensor (30) im Konfigurationsmodus von dem externen Rechner (20) aus über die Schnittstelle (60) mit elektrischer Energie versorgt wird, und
**dass** die Schnittstelle eingerichtet ist, um in dem Konfigurationsmodus über zwei Adern einer Datenleitung Konfigurationsdaten mit einer Bandbreite größer als 1 MBit/s differenziell zwischen dem Sensor (30) und dem externen Rechner (20) zu übertragen.

2. Sensor nach Anspruch 1,
**dadurch gekennzeichnet,**
**dass** die Schnittstelle (60) Hardwaremittel, insbesondere einen Steckverbinder (38), sowie eine Software (44) aufweist, die in der Steuer- und Auswerteeinheit (40) gespeichert ist.

3. Sensor nach Anspruch 2,
**dadurch gekennzeichnet,**
**dass** die Software (44) zum, insbesondere automatischen, Bereitstellen einer USB-Slave-Funktionalität der Schnittstelle (60) eingerichtet ist, wenn der Sensor (30) an den externen Rechner (20) angeschlossen ist.

4. Sensor nach einem der Ansprüche 1 bis 3
**dadurch gekennzeichnet,**
**dass** in dem Speicher (50) der Steuer- und Auswerteeinheit (40) eine Konfigurationssoftware (56) gespeichert ist, welche in einen Arbeitsspeicher eines externen Rechners (20) geladen werden kann, wenn der Sensor (30) an den externen Rechner (20) angeschlossen ist, und
**dass** die Konfigurationssoftware (56) zum automatischen oder interaktiven Konfigurieren des Sensors (30) durch einen Benutzer eingerichtet ist.

5. Sensor nach einem der Ansprüche 1 bis 4,
**dadurch gekennzeichnet,**
**dass** eine elektronische Einrichtung (48) vorhanden ist, die erkennt, ob sich der Sensor (30) in einer Betriebsverbindung mit einem Anschlussgerät befindet und/oder ob der Sensor (30) mit einem externen Rechner (20) verbunden ist.

6. Sensor nach Anspruch 5,
**dadurch gekennzeichnet,**
**dass** die elektronische Einrichtung (48) eine an mindestens einem Kontakt der Schnittstelle (60) anliegende Versorgungsspannung auswertet.

7. Sensor nach Anspruch 5 oder 6,
**dadurch gekennzeichnet,**
**dass** die elektronische Einrichtung (48) ein an mindestens einem Kontakt der Schnittstelle (60) anliegendes Datensignal auswertet.

8. Sensor nach einem der Ansprüche 1 bis 7,
**dadurch gekennzeichnet,**
**dass** der Speicher (50) der Steuer- und Auswerteeinheit (40) einen schreibgeschützten Bereich (57) aufweist.

9. Sensor nach einem der Ansprüche 1 bis 8,
**dadurch gekennzeichnet,**
**dass** der Steckverbinder (38) ein dichtender Rundsteckverbinder ist.

10. Sensor nach einem der Ansprüche 1 bis 9,
**dadurch gekennzeichnet,**
**dass** in einem Speicher der Steuer- und Auswerteeinheit ein Bootloader (53) vorhanden ist.

11. Verfahren zum Übermitteln von Konfigurationsdaten von einem externen Rechner an einen Sensor für die Automatisierungstechnik, insbesondere nach einem der Ansprüche 1 bis 10,
bei dem der Sensor (30) über eine Schnittstelle (60) in einem Konfigurationsmodus direkt mit einem externen Rechner (20) verbunden und von dem externen Rechner (20) aus mit elektrischer Energie versorgt wird, und
bei dem im Konfigurationsmodus über zwei Adern einer Datenleitung Konfigurationsdaten mit einer Bandbreite größer als 1 MBit/s differenziell zwischen dem Sensor (30) und dem externen Rechner (20) übertragen werden,
wobei dieselbe Schnittstelle (60) für einen Betriebsmodus eingerichtet ist zum Verbinden des Sensors (30) mit.einem Anschlussgerät und
wobei der Sensor (30) im Betriebsmodus von dem Anschlussgerät aus über die Schnittstelle (60) mit elektrischer Energie versorgt wird.

12. Verfahren nach Anspruch 11,
**dadurch gekennzeichnet,**
**dass** der Sensor (30) zeitweilig mit dem externen Rechner (20) verbunden wird, dass anschließend eine in einem Speicher (50) des Sensors (30) gespeicherte Konfigurationssoftware (56) in einen Arbeitsspeicher des Rechners (20) geladen wird und
**dass** anschließend der Sensor (30) mit Hilfe der Konfigurationssoftware (56) automatisch oder von einem Benutzer konfiguriert wird.

13. Verfahren nach Anspruch 11 oder 12,
**dadurch gekennzeichnet,**
**dass** der Sensor (30) von dem externen Rechner (20) als Massenspeicher erkannt und behandelt wird.

14. Verfahren nach einem der Ansprüche 11 bis 13,
**dadurch gekennzeichnet,**
**dass** der Sensor (30) im Konfigurationsmodus an eine USB-Schnittstelle (22) des externen Rechners angeschlossen wird.

15. Verfahren nach einem der Ansprüche 11 bis 14,
**dadurch gekennzeichnet,**
**dass** in dem Speicher (50) der Steuer- und Auswerteeinheit (40) eine Software (44) gespeichert ist zum Bereitstellen einer USB-Slave-Funktionalität der Schnittstelle (60), wobei die Software gestartet wird, wenn der Sensor (30) an den externen Rechner (20) angeschlossen wird.

16. Verfahren nach einem der Ansprüche 11 bis 15,
**dadurch gekennzeichnet,**
**dass** die Konfigurationssoftware (56) nach Verbindung des Sensors (30) mit dem externen Rechner (20) automatisch oder nach Bestätigung durch einen Benutzer auf dem externen Rechner (20) gestartet wird.

17. Verfahren nach einem der Ansprüche 11 bis 16,
**dadurch gekennzeichnet,**
**dass** die Konfigurationssoftware (56) den externen Rechner (20) veranlasst, eine Netzwerkverbindung zu einem Remote-Host aufzubauen und zu prüfen, ob aktuelle Programmversionen für die Konfigurationssoftware (56) und/oder eine Sensor-Firmware (52) vorliegen und
**dass** gegebenenfalls aktuelle Programmversionen vom Remote-Host heruntergeladen und in den Speicher (50) des Sensors (30) übertragen werden.

18. Verfahren nach einem der Ansprüche 11 bis 17,
**dadurch gekennzeichnet,**
**dass** die Konfigurationssoftware (56) in dem Speicher (50) des Sensors (30) als ausführbares oder interpretierbares Programm gespeichert ist.
